(19) Europäisches Patentamt
European Patent Office
Office européen des brevets

(11) **EP 3 326 283 B1**

(12) **EUROPÄISCHE PATENTSCHRIFT**

(45) Veröffentlichungstag und Bekanntmachung des Hinweises auf die Patenterteilung:
**30.08.2023 Patentblatt 2023/35**

(21) Anmeldenummer: **16744320.9**

(22) Anmeldetag: **07.07.2016**

(51) Internationale Patentklassifikation (IPC):
**H02M 7/5395** (2006.01)   **H02M 7/5387** (2007.01)

(52) Gemeinsame Patentklassifikation (CPC):
**H02M 7/5387; H02M 7/53875; H02M 7/5395;**
H02M 7/53871; Y02E 10/56

(86) Internationale Anmeldenummer:
**PCT/EP2016/066092**

(87) Internationale Veröffentlichungsnummer:
**WO 2017/012882 (26.01.2017 Gazette 2017/04)**

(54) **VERFAHREN ZUM BETRIEB EINES WECHSELRICHTERS UND WECHSELRICHTER, SOWIE PHOTOVOLTAIKANLAGE**

METHOD FOR OPERATING AN INVERTER, INVERTER, AND PHOTOVOLTAIC SYSTEM

PROCÉDÉ DE FONCTIONNEMENT D'UN ONDULEUR, ONDULEUR, ET SYSTÈME PHOTOVOLTAÏQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2015 DE 102015111804**

(43) Veröffentlichungstag der Anmeldung:
**30.05.2018 Patentblatt 2018/22**

(73) Patentinhaber: **SMA Solar Technology AG**
**34266 Niestetal (DE)**

(72) Erfinder:
 • **PETSCHENKA-RININSLAND, Josef**
   **34125 Kassel (DE)**
 • **FUETTERER, Cornelius**
   **37339 Gernrode (DE)**

(56) Entgegenhaltungen:
**DE-A1-102011 051 954    US-A1- 2011 273 017**

 • **LEE H-D ET AL: "A NEW SPACE VECTOR PULSEWIDTH MODULATION STRATEGY FOR REDUCING GROUND TO STATOR-NEUTRAL VOLTAGE IN INVERTER-FED AC MOTOR DRIVES", APEC 2000. 15TH. ANNUAL IEEE APPLIED POWER ELECTRONICS CONFERENCE AND EXPOSITION. NEW ORLEANS, LA, FEB. 6-10, 2000; [ANNUAL APPLIED POWER ELECTRONICS CONFERENCE], NEW YORK, NY : IEEE, US, Bd. CONF. 15, 6. Februar 2000 (2000-02-06) , Seiten 918-923, XP001036229, ISBN: 978-0-7803-5865-2**

EP 3 326 283 B1

**Beschreibung**

Die Erfindung betrifft ein Verfahren zum Betrieb eines Wechselrichters, dessen Gleichspannungseingang mit einem positiven Pol und einem negativen Pol eines PV-Generators und dessen Wechselspannungsausgang über einen Transformator mit einem Wechselstromnetz verbunden ist, eine Photovoltaikanlage und ein Wechselrichter, der eingerichtet ist, ein solches Verfahren auszuführen.

Photovoltaikgeneratoren oder kurz PV-Generatoren dienen als Teil von Photovoltaikanlagen (PV-Anlagen) der Umwandlung von Sonnenenergie in elektrische Energie. Dabei umfassen die PV-Generatoren üblicherweise eine Mehrzahl von Photovoltaikmodulen (PV-Modulen), die wiederum jeweils eine Vielzahl von Photovoltaikzellen (PV-Zellen) aufweisen.

Die PV-Generatoren sind in der Regel an einen Wechselrichter gekoppelt, der die von den PV- Generatoren erzeugte Gleichspannung (DC-Spannung) in eine Wechselspannung (AC-Spannung) wandelt, um diese in ein öffentliches Stromversorgungsnetz oder in ein privates Stromversorgungsnetz (sog. Inselnetz) einzuspeisen. Hierbei kann zur Spannungsanhebung die Ausgangspannung des Wechselrichters mittels eines Transformators auf eine höhere Spannung angehoben werden, um z.B. direkt in ein Mittel- oder Hochspannungsnetz einspeisen zu können.

Abhängig vom Einsatzzweck und der Höhe der erzeugten elektrischen Leistung variiert der Aufbau solcher PV-Anlagen erheblich. So kann sich die vom Wechselrichter erzeugte AC-Spannung z.B. sowohl hinsichtlich ihrer Amplitude, ihrer Frequenz als auch in der Anzahl der Phasen unterscheiden. Häufig werden Wechselrichter, die eine geringe Ausgangsleistung haben, 1-phasig und solche, die eine hohe Leistung abgeben, 3-phasig ausgebildet. Je nach Ausbildung des Netzes, mit dem diese Wechselrichter verbunden sind, sind aber auch andere Ausführungen denkbar.

Die Ausgangsspannung der PV-Generatoren beträgt üblicherweise zwischen 500 - 1 000V, wobei es aktuell Bestrebungen gibt, diese Spannung auf 1500V zu erhöhen. Durch die Wahl einer relativ hohen DC-Spannung werden ohmsche Verluste in den zwischen den PV-Generatoren und den Wechselrichtern verlaufenden Gleichstromleitungen verringert. Allerdings erwachsen hieraus auch technische Probleme, z.B. hinsichtlich der Höhe der Isolationsspannungen und damit verbunden hinsichtlich der Belastung der einzelnen Komponenten der PV-Anlage. Das betrifft sowohl DC- wie auch AC-seitig angeordnete Komponenten wie beispielsweise den Transformator oder die Halbleiterschalter des Wechselrichters.

In PV-Anlagen, in denen ein Transformator zwischen dem Wechselspannungsausgang des Wechselrichters und dem Wechselstromnetz angeordnet ist, ist der Anlagenteil vom PV-Generator bis zum Transformator zunächst potentialfrei. Bedingt durch nicht unendlich hohe Isolationswiderstände, insbesondere von Gleichstromleitungen, die zwischen den PV-Generatoren und den Wechselrichtern verlaufen, stellt sich im Betrieb am Plus- und Minuspol ein Potential ein, das in etwa symmetrisch um das Erdpotential liegt. Bei einer Photovoltaikspannung von beispielsweise 1000 V am Ausgang eines PV-Generators liegt der Minuspol des PV-Generators auf einem Potential von etwa - 500 V gegenüber dem Erdpotential und der Pluspol auf einem Potential von etwa + 500 V gegenüber dem Erdpotential. Bauartbedingt ist bei manchen Typen von PV-Modulen ein zu hohes negatives oder, bei anderen Typen, ein zu hohes positives Potential des PV-Moduls oder Teilen des PV-Moduls gegenüber dem Erdpotential unerwünscht. Es können dann verschiedene Maßnahmen zur Einstellungen der Potentiale gegenüber Erdpotential getroffen werden. Man unterscheidet hier beispielsweise eine direkte (starre) Erdung eines Pols des PV-Generators, sog. PV+ bzw. PV- Erdung, oder auch indirekte Erdungsvarianten, bei denen sich die Potentiale gegenüber Erde aufgrund von (systembedingten) Impedanzen oder durch das gezielte Einbringen von Impedanzen zwischen einem Pol des PV-Generators und Erde ergeben. Daneben existieren auch komplexere Vorrichtungen, die eine gezielte Potentialsteuerung erlauben. Zahlreiche Druckschriften beschreiben entsprechende Vorrichtungen, die es erlauben das Potential eines Pols des PV-Generators zu verschieben. Beispielhaft seien hier die Druckschriften DE202006008936 U1, EP2136449 B1 und DE102010060463 B4 genannt.

Auch die Offenlegungsschriften DE 10 2011 051 954 A1 und US 2011 0273017A1 offenbaren jeweils ein Verfahren zum Betrieb eines Wechselrichters der eingangs genannten Art, bei welchem mittels einer komplexen Vorrichtung das Potential eines Pols des PV-Generators verschoben wird.

Bei den heute gebräuchlichen Wechselrichtertopologien wie etwa der B6-Topologie finden Halbleiterschalter z.B. MOSFETs oder IGBTs Verwendung. Zur Umwandlung einer DC-Spannung in eine AC-Spannung werden diese Halbleiterschalter mittels geeigneter Treiberschaltungen angesteuert. Man spricht hier im Allgemeinen von Taktung der Halbleiterschalter. Hierbei können ganz unterschiedliche Taktverfahren zum Einsatz kommen, weit verbreitet sind sog. Puls-Weiten-Modulations-Verfahren (PWM-Verfahren). Einen Einblick in diese Verfahren vermitteln z.B. J. Holtz, "Pulsewidth modulation-A survey, "in Proc. IEEE PESC'92, 1992, S. 1 7- 18. oder Kazmierkowski M.P., Ozieniakowski M.A. (1994): Review of current regulation techniques for three-phase PWM inverters. IEEE Conference on Industrial Electronics, Control and Instrumentation, Record, S. 567575.

Die Auswahl eines für einen bestimmten Wechselrichter bzw. für eine bestimmte PV-Anlage geeigneten PWM-Verfahren basiert im Stand der Technik in der Regel darauf, dass ein entsprechendes Verfahren möglichst zu einer Verringerung von Oberschwingungen sog. Harmonischen und/oder einer Minimierung der Verlustleistung z.B. durch

EP 3 326 283 B1

Schaltverluste beiträgt. Welches Verfahren letztendlich besonders gute Ergebnisse liefert, hängt u.a. von der Wechselrichtertopologie ab. Aber auch andere Komponenten, wie etwa Snubber und deren Wechselwirkung mit dem PWM-Verfahren müssen berücksichtigt werden.

Bei den bekannten PWM-Modulationsverfahren unterscheidet man insbesondere zwischen sog. symmetrischen und diskontinuierlichen bzw. asymmetrischen Verfahren. Kurz gesagt werden bei den asymmetrischen Verfahren einige Schalter einer Brücke häufiger getaktet als andere. Bei einer B6-Brücke werden bei einem Modulations-Verfahren beispielsweise die unteren Halbleiterschalter (Bottom) im Vergleich zu den oberen Halbleiterschaltern (Top) der Wechselrichterbrücke weniger häufig getaktet. In einem anderen Verfahren ist dieses Verhältnis umgekehrt. Solche Verfahren werden beispielsweise in der Veröffentlichung M. RAJENDER REDDY, "SIMPLE AND NOVEL UNIFIED PULSE WIDTH MODULATION ALGORITHM FOR VOLTAGE SOURCE INVERTERS IN THE ENTIRE MODULATION RANGE", Acta E/ectrotechnica et Informatica, vol. 13, No. 3, 2013, S.48-55 beschrieben.

SHAOLIANG AN; LU LAI; XIAIVGDONG SUN; YANRU ZHONG;BIYING REN; QI ZHANG "Neutral point voltage-balanced control method based on discontinuous pulse width modulation for a NPC 3-level inverter", 2015 9th International Conference on Power Electronics and ECCEAsia (ICPE-ECCE Asia), 2015, S. 2820 - 2825, offenbart ein Symmetrierverfahren für die Teilspannungen im Zwischenkreis eines NPC-Solarwechselrichters.

HYEOUN-DONG LEE et al. "A New Space Vector Pulsewidth Modulation Strategy for Reducing Ground to Stator-Neutral Voltage in Inverter-Fed ac Motor Drives", APEC 2000, 15th Annual IEEE Applied Power Electronics Conference and Exposition, New Orleans, S. 918-923 offenbart ein Verfahren zum Betrieb eines Gleichrichter/Wechselrichter-Systems für Motoren, bei dem mit Hilfe einer Messung des Potentials des Mittelpunktes des DC Zwischenkreises bzgl. der Erde zwischen zwei unterschiedlichen Modulationsverfahren entschieden wird. Das ausgewählte Modulationsverfahren wird zur Ansteuerung der Leistungshalbleiterschalter des Wechselrichters verwendet.

Aus der US20140 376 293A1 ist ein Wechselrichter mit mittig geerdetem Photovoltaikgenerator bekannt.

Es ist Aufgabe der Erfindung, ein Verfahren zum Betrieb eines Wechselrichters anzugeben, das durch geeignete Wahl eines Modulationsverfahrens zur Ansteuerung der Leistungsschalter des Wechselrichters die Spannungsbelastung insbesondere AC-seitig angeordneter Komponenten der PV-Anlage gegen Erde verringert. Auf diese Weise kann eine Belastung z.B. der Isolierung am Unterspannungsanschluss des Transformators reduziert werden. Dadurch erhöht sich die Lebensdauer der beanspruchten Komponenten.

Diese Aufgabe wird gelöst durch ein Verfahren gemäß Anspruch 1 bzw. durch eine PV-Anlage gemäß Anspruch 1 1 Bevorzugte Ausführungsformen sind in den Unteransprüchen beschrieben.

Bei einem erfindungsgemäßen Verfahren zum Betrieb eines Wechselrichters, dessen Gleichspannungseingang mit einem positiven Pol und einem negativen Pol eines PV-Generators und dessen Wechselspannungsausgang über einen Transformator mit einem Wechselstromnetz verbunden ist, wird ein Potential des positiven und des negativen Pols des PV-Generators gegenüber einem Erdpotential durch ein Überwachungsmittel bestimmt. Auf Basis dieses Potentials folgt die Auswahl eines Modulationsverfahrens zur Ansteuerung von Leistungsschaltern des Wechselrichters aus einer Anzahl von in einer Speichereinrichtung des Wechselrichters hinterlegten Modulationsverfahren derart, dass sich die Spannungsbelastung AC-seitig angeordneter Komponenten der PV-Anlage gegen Erde verringert. Das ausgewählte Modulationsverfahren wird zur Ansteuerung der Leistungsschalter und somit zur Wandlung der DC-Eingangsspannung in eine AC-Ausgangsspannung verwendet.

Der vorliegenden Erfindung liegt die Erkenntnis zu Grunde, dass sich in PV-Anlagen, welche über einen Transformator verfügen und über einen solchen mit dem Wechselspannungsnetz (AC-Netz) verbunden sind, durch geeignete Wahl eines Modulationsverfahrens zur Ansteuerung der Leistungsschalter eines Wechselrichters die Belastung insbesondere AC-seitig angeordneter Komponenten der PV-Anlage verringern lässt, indem die Potentiale der positiven und negativen Pole der PV-Generatoren gegenüber dem Erdpotential als Kriterien zur Auswahl aus der Vielzahl an sich bekannter Modulationsverfahren hinzugezogen werden. Im Stand der Technik findet sich kein Hinweis darauf, die Potentialdifferenz des PV-Generators bzw. seiner Pole als ein Kriterium bei der Auswahl eines geeigneten PWM-Verfahrens heranzuziehen.

In einem erfindungsgemäßen Verfahren umfassen die in der Speichereinrichtung des Wechselrichters hinterlegten Modulationsverfahren insbesondere ein als DPWMMIN-Verfahren und/oder ein als DPWMMAX-Verfahren bezeichnetes Modulationsverfahren. Einzelheiten zu diesen Verfahren finden sich beispielsweise in der Veröffentlichung X. Yang, "Genera/ized Space Vector Pulse Width Modulation Technique for Cascaded Multilevel Inverters"; International Journal of Control and Automation, vol.7 No. 1 (2014), S.. 11-26.

In einer Ausführungsform des erfindungsgemäßen Verfahren kann vorsehen sein, einen Betrag des Potentials des positiven Pols gegenüber Erde mit einem Betrag des Potentials des negativen Pols gegenüber Erde zu vergleichen.

In einer weiteren bevorzugten Ausführungsform des erfindungsgemäßen Verfahrens wird für den Fall, dass der Betrag des Potentials des positiven Pols gegenüber Erde kleiner als der Betrag des Potential des negativen Pols gegenüber Erde ist, ein erstes Modulationsverfahren und für den Fall, dass der Betrag des Potential des positiven Pols gegenüber Erde größer als der Betrag des Potential des negativen Pols gegenüber Erde ist, ein zweites Modulationsverfahren ausgewählt.

In einer Ausführungsform des erfindungsgemäßen Verfahrens ist das erste Modulationsverfahren ein DPWMMAX-Modulationsverfahren und das zweite Modulationsverfahren ein DPWMMIN-Modulationsverfahren.

Bei Verwendung des DPWMMAX-Modulationsverfahren wird bei einer B6-Brücke, wie sie oben bereits beispielhaft angeführt wurde, die mit Top bezeichneten oberen Halbleiterschalter im zeitlichen Mittel seltener als die mit Bottom bezeichneten unteren Halbleiterschalter getaktet. Bei Verwendung des DPWMMIN-Modulationsverfahren dagegen werden bei einer B6-Brücke die mit Bottom bezeichneten unteren Halbleiterschalter im zeitlichen Mittel seltener als die mit Top bezeichneten oberen Halbleiterschalter getaktet. Sollte es sich um ein ungeerdetes System handeln, so dass die beiden genannten Beträge in etwa gleich Null sind, wird bevorzugt das DPWMMIN-Modulationsverfahren verwendet.

Bei einem erfindungsgemäßen Verfahren kann vorgesehen sein, dass das Verfahren vor dem Verbinden des Wechselrichters mit dem Wechselstromnetz und/oder dass das Verfahren mehrmals täglich durchgeführt wird. Weiter kann vorgesehen sein, dass die Bestimmung des Potentials des positiven und des negativen Pols des PV-Generators gegenüber dem Erdpotential durch ein Überwachungsmittel und die Auswahl des Modulationsverfahrens zur Ansteuerung der Leistungsschalter des Wechselrichters aus der Anzahl von in der Speichereinrichtung des Wechselrichters hinterlegten Modulationsverfahren auf Basis des zuvor bestimmten Potentials vor dem Verbinden des Wechselrichters mit dem Wechselstromnetz durchgeführt wird. In einer weiteren Ausführungsform des erfindungsgemäßen Verfahren wird die Bestimmung des Potentials des positiven und des negativen Pols des PV-Generators gegenüber dem Erdpotential durch ein Überwachungsmittel und die Auswahl des Modulationsverfahrens zur Ansteuerung der Leistungsschalter des Wechselrichters aus der Anzahl von in der Speichereinrichtung des Wechselrichters hinterlegten Modulationsverfahren auf Basis des zuvor bestimmten Potentials durchgeführt, während der Wechselrichter mit dem Wechselstromnetz verbunden ist.

Dabei ist es auch denkbar, dass das Verfahren kontinuierlich durchgeführt wird. So könnten die Beträge der Potentiale des positiven und des negativen Pols gegenüber Erde dauerhaft überwacht werden. Sollte sich hierbei ergeben, dass sich die Bedingungen gegenüber denen, die bei der Auswahl des Modulationsverfahrens vorlagen, derart geändert haben, dass nun ein anderes Modulationsverfahren zu wählen wäre, so wird das besser geeignete Modulationsverfahren ausgewählt. Um einen ständigen Wechsel zwischen unterschiedlichen Modulationsverfahren zu vermeiden, kann vorgesehen sein, dass zu einem Zeitpunkt ein Wechsel von dem zu einem früheren ersten Zeitpunkt ausgewählten Modulationsverfahren zu einem anderen Modulationsverfahren nur dann erfolgt, wenn die Differenz zwischen den beiden Zeitpunkten größer einer Mindestzeitspanne von beispielsweise 1 Minute ist. An Stelle der Vorgabe einer Mindestzeitspanne kann auch eine Vorgabe hinsichtlich eines Schwellenwertes $U_{Schwell}$ der Höhe der erforderlichen Änderungen in der Differenz der Beträge der Potentiale des positiven und des negativen Pols gegenüber Erde erfolgen. Dieser Schwellwert wird in Abhängigkeit der Spannungsdifferenz zwischen dem positiven und dem negativen Pol des PV-Generators, z.B. als ein Prozentsatz derselben, ermittelt, oder kann als fester Wert, beispielsweise zu 50V, vorgegeben werden. Ein Wechsel von dem zu einem ersten Zeitpunkt ausgewählten Modulationsverfahren zu einem anderen Modulationsverfahren erfolgt dann, wenn sich eine Differenz der Beträge der Potentiale des positiven Pols und des negativen Pols gegenüber Erde zu einem zweiten Zeitpunkt von einer zu dem früheren ersten Zeitpunkt bestimmten Differenz im Vorzeichen unterscheidet und ein Betrag der Differenz der Beträge der Potentiale des positiven und des negativen Pols gegenüber Erde zu den Zeitpunkten zu den beiden Zeitpunkten größer als ein Schwellenwert von z.B. 50V ist, also wenn gilt:

$$\left|\, |\,(|U_{PV+}| - |U_{PV-}|)_{t=t1}\,| \;-\; |\,(|U_{PV+}| - |U_{PV-}|)_{t=t2}\,| \,\right| > U_{Schwell}$$

In einer weiteren Ausführungsform der Erfindung weist eine PV-Anlage einen PV-Generator und einen mit dem PV-Generator über einen positiven Pol und einen negativen Pol verbundenen Wechselrichter auf. Die PV-Anlage verfügt über einen Transformator und ist über diesen mit einem Wechselspannungsnetz verbunden, weiterhin weist sie ein Überwachungsmittel zur Bestimmung eines Potentials des positiven und des negativen Pols des PV-Generators gegenüber einem Erdpotential auf. Der Wechselrichter weist eine Speichereinrichtung zur Speicherung von Informationen zur Durchführung mindestens zweier verschiedener Modulationsverfahren auf und umfasst Leistungsschalter sowie Mittel zur Ansteuerung dieser Leistungsschalter, um eine DC-Eingangsspannung in eine AC-Ausgangsspannung zu wandeln. Weiter weist der Wechselrichter eine Steuerung auf, die Mittel zur Kommunikation mit dem Überwachungsmittel und zur Auswahl eines Modulationsverfahrens zur Ansteuerung von Leistungsschaltern des Wechselrichters aus den in der Speichereinrichtung des Wechselrichters hinterlegten Modulationsverfahren auf Basis des zuvor bestimmten Potentials des positiven und des negativen Pols gegenüber dem Erdpotential umfasst.

Ein erfindungsgemäßer Wechselrichter weist Leistungsschalter und ein Mittel zur Ansteuerung dieser Leistungsschalter zur Umwandlung einer DC-Eingangsspannung in eine AC-Ausgangsspannung auf. Der Wechselrichter weist eine Speichereinrichtung zur Speicherung von Informationen zur Durchführung mindestens zweier verschiedener Modulationsverfahren und eine Steuerung auf. Die Steuerung umfasst Mittel zur Kommunikation mit einem Überwachungsmittel und zur Auswahl eines Modulationsverfahrens zur Ansteuerung der Leistungsschalter des Wechselrichters aus den in der Speichereinrichtung des Wechselrichters hinterlegten Modulationsverfahren auf Basis eines zuvor bestimmten Potentials eines positiven und eines negativen Pols gegenüber einem Erdpotential.

Im Folgenden wird die Erfindung mithilfe von Figuren dargestellt, von denen

Fig. 1       eine erfindungsgemäße PV-Anlage,

Fig. 2       eine vereinfachte Darstellung einer B6-Brücke,

Fig. 3       ein Flussdiagramm einer bevorzugten Ausführungsform des erfindungsgemäßen Verfahrens,

Fig.4a       den Spannungsverlauf einer Phase gegenüber Erde für unterschiedliche Modulationsverfahren bei Erdung des negativen Pols,

Fig. 4b       den Spannungsverlauf einer Phase gegenüber Erde für unterschiedliche Modulationsverfahren bei Erdung des positiven Pols eines PV-Generators und

Fig. 5       einen Graphen zur Verdeutlichung der Bedingungen zur Auswahl der Modulationsverfahren zeigt.

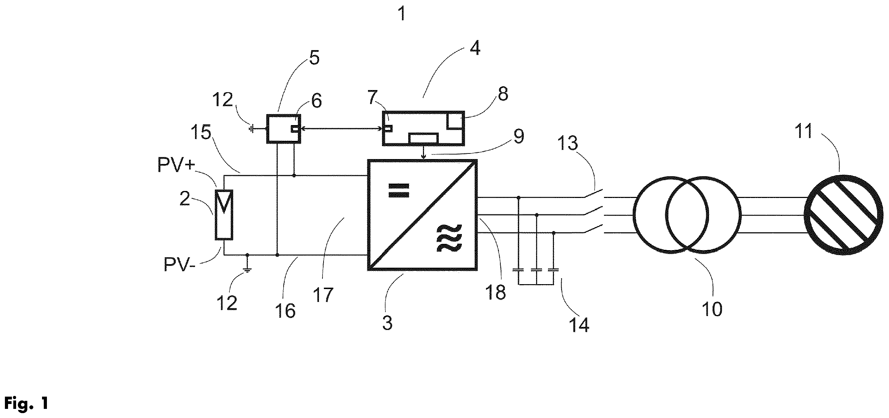

Fig.1 zeigt eine schematische Darstellung einer erfindungsgemäßen PV-Anlage 1. Der positive Pol PV+ und der negative Pol PV- des PV-Generators 2 sind über die Gleichspannungsleitungen 15, 16 mit dem Gleichspannungseingang 17 des Wechselrichters 3 verbunden. Auf Einzelheiten zur Ausgestaltung des Wechselrichters 3 und des Gleichspannungszwischenkreises, wie z.B. Zwischenkreiskapazitäten, Sicherungselemente, etc. wurde zur besseren Übersichtlichkeit verzichtet. Im vorliegenden Fall ist der negative Pol PV- des PV-Generators 2 mit dem Erdpotential 12 verbunden.

Weiter zeigt die Fig. 1 ein Überwachungsmittel 5 zur Bestimmung der Potentiale des positiven und des negativen Pols ($U_{PV+}$, $U_{PV-}$) gegenüber Erde 12. Abweichend davon sind auch Varianten denkbar, bei denen lediglich eines der Potentiale $U_{PV+}$ oder $U_{PV-}$ bestimmt wird. Durch die Kenntnis einer weiteren Größe, wie etwa einer Zwischenkreisspannung $U_{PV}$, also der Spannung zwischen den Gleichspannungsleitungen 15, 16 kann das nicht direkt ermittelte Potential bestimmt werden.

Das Überwachungsmittel 5 verfügt über Mittel zur Kommunikation 6 zumindest mit der Steuerung 4 des Wechselrichters 3. Dabei ist die Art, wie das Mittel zur Kommunikation 6 ausgeführt ist, nicht wesentlich. So können sowohl kabelgebundene als auch kabellose Verfahren zur Übermittlung der Informationen zum Einsatz kommen. Weiter ist es für die vorliegende Erfindung unerheblich, ob die Übertragung auf Basis elektrischer, elektromagnetischer oder anderer Signale erfolgt.

Die Steuerung 4 verfügt ihrerseits über entsprechende Mittel zur Kommunikation 7 mit dem Überwachungsmittel 5. Dabei dient die Speichereinrichtung 8, die in der dargestellten Ausführungsform Teil der Steuerung 4 ist, der Speicherung aller notwendigen Informationen bzw. aller notwendigen Parameter zur Ausführung mindestens zweier verschiedener Modulationsverfahren. Weiter umfasst die Steuerung Mittel zur Ansteuerung 9 der Leistungsschalter des Wechselrichters 3.

Der Wechselspannungsausgang 18 des Wechselrichters 3 ist über AC-seitige Trennorgane 1 3 und einen Transformator 10 mit einem Wechselstromnetz 1 1 verbunden. In der Fig. 1 ist der Wechselrichter AC-seitig dreiphasig ausgeführt und weist ein AC-seitiges Filter 14 auf. Auch hier wurde wieder zu Gunsten einer besseren Übersichtlichkeit auf weitere Einzelheiten verzichtet und nur die für das Verständnis der Erfindung notwendigen Komponenten eingezeichnet.

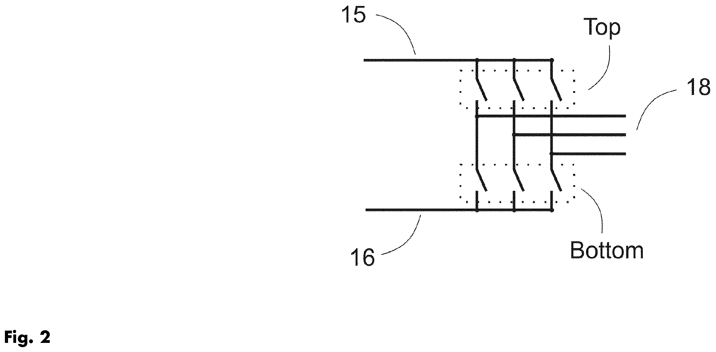

Die Fig. 2 zeigt eine stark vereinfachte Darstellung einer sog. B6-Brücke, wie sie beispielsweise in dem in Fig.1 dargestellten dreiphasigen Wechselrichter 3 zum Einsatz kommen kann. Dabei sind die oberen Halbleiterschalter mit Top und die unteren Halbleiterschalter mit Bottom bezeichnet.

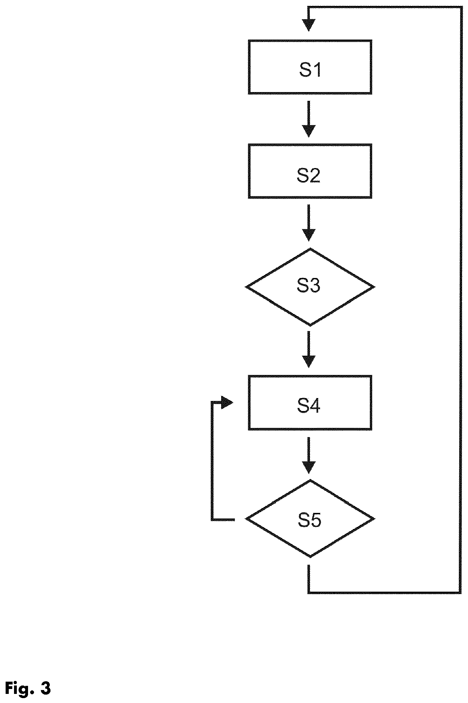

Fig. 3 zeigt ein Flussdiagramm einer bevorzugten Ausführungsform des erfindungsgemäßen Verfahrens. In Schritt S1 werden zum Zeitpunkt *t*1 zunächst mittels des Überwachungsmittels 5 die Potentiale des positiven und des negativen Pols ($U_{PV+}$, $U_{PV-}$) des PV-Generators 2 gegenüber dem Erdpotential 12 bestimmt. Diese Werte werden in Schritt S2 an die Steuerung 4 mit Hilfe der Mittel zur Kommunikation 6, 7 übertragen. Dort findet in einem Schritt S3 eine Auswertung dieser Messwerte statt. Dazu werden die Beträge der Potentiale des positiven und des negativen Pols ($U_{PV+}$, $U_{PV-}$) des PV-Generators 2 gegenüber dem Erdpotential 12 miteinander verglichen. Ergibt dieser Vergleich, dass der Betrag des Potentials des positiven Pols PV+ gegenüber Erde ($|U_{PV+}|$) kleiner als der Betrag des Potentials des negativen Pols PV- gegenüber Erde ($|U_{PV-}|$) ist, wird das sog. DPWMMAX-Modulationsverfahren ausgewählt. Ist im umgekehrten Fall der Betrag des Potentials des positiven Pols PV+ gegenüber Erde ($|U_{PV+}|$) größer als der Betrag des Potentials des negativen Pols PV- gegenüber Erde ($|U_{PV-}|$) so wird das DPWMMIN-Modulationsverfahren ausgewählt.

In einer alternativen Ausführungsform erfolgt eine Auswertung der Potentiale in der oben geschilderten Art innerhalb des Überwachungsmittels 5.

Entsprechend dem Ergebnis der Auswertung in Schritt S3 generiert das Mittel zur Ansteuerung 9 der Leistungsschalter in Schritt S4 dem ausgewählten Modulationsverfahren entsprechende Schaltpulse, um die Halbleiterschalter Top, Bottom der Wechselrichterbrücke gemäß des ausgewählten Modulationsverfahren zu takten.

In einem Schritt S5 erfolgt zu einem Zeitpunkt *t2* eine erneute Bestimmung der Potentiale $U_{PV+}$ und $U_{PV-}$ durch das Überwachungsmittel 5 und eine zu Schritt S3 analoge Auswertung der Messwerte. Dieser Vorgang kann quasikontinuierlich ablaufen, so dass kontinuierlich entsprechende Messwerte erfasst und ausgewertet werden, oder es können feste Zeiten, Zeitintervalle oder anderweitige Ereignisse, z.B. ein Wiederanstieg der Zwischenkreisspannung $U_{PV}$ nach einem rapiden Abfall dieser zum Anlass genommen werden, die Potentiale $U_{PV+}$ und $U_{PV-}$ erneut zu bestimmen und auszuwerten. Ein Wechsel zu Schritt S1 des angeführten Verfahrens erfolgt allerdings nur dann, wenn sich die Differenz der oben genannten Beträge der Potentiale $|U_{PV+}|$ - $|U_{PV-}|$ zum aktuellen Zeitpunkt *t2* im Vorzeichen von dem bei der Auswahl des aktuell verwendeten Modulationsverfahrens zum Zeitpunkt *t1* unterscheidet und der entsprechende Betrag der Differenz der Beträge der Potentiale des positiven und des negativen Pols gegenüber Erde zu den Zeiten *t1*, *t2* größer als ein Schwellenwert ist. Ist das nicht der Fall, wird das ursprüngliche Modulationsverfahren beibehalten.

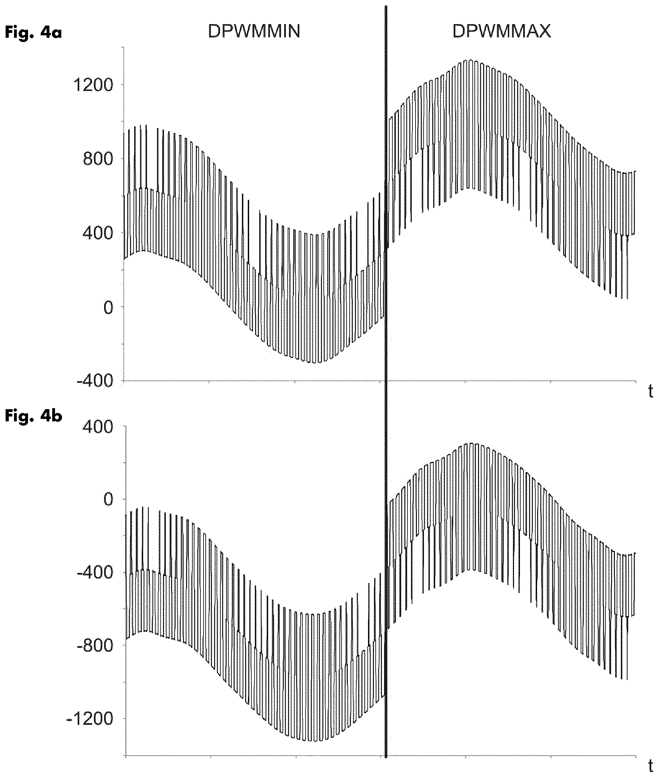

In den Fig. 4a und 4b ist exemplarisch der zeitliche Verlauf der Spannung einer Phase am Ausgang des Wechselrichters 3 gegenüber Erde für zwei unterschiedliche Modulationsverfahren bei Erdung des negativen bzw. des positiven Pols (PV-, PV+) des PV-Generators 2 mit einer Zwischenkreisspannung $U_{PV}$ von 1000V dargestellt.

In den jeweiligen Graphen zeigt sich sehr deutlich der unterschiedliche Einfluss der Modulationsverfahren auf die Lage der Ausgangsspannungen des Wechselrichters 3 gegenüber dem Erdpotential 0. Zunächst wird eine Anordnung betrachtet, bei der der negative Pol des PV-Generators geerdet ist. In Fig. 4a stellt sich bei einem solchen System bei Verwendung des DPWMMIN-Modulationsverfahrens eine Spannung gegen Erde von maximal 970V ein, wohingegen bei Verwendung des DPWMMAX-Modulationsverfahrens das Maximum bei 1330V liegt. In diesem Fall werden also die AC-seitigen Komponenten bei Verwendung des DPWMMIN-Modulationsverfahrens weniger stark belastet. Der umgekehrte Fall liegt in Fig. 4b bei Erdung des positiven Pols vor. Hier beträgt der maximale Betrag der Spannung gegenüber Erde bei Verwendung des DPWMMIN-Modulationsverfahrens 1330V und bei Verwendung des DPWMMAX-Modulationsverfahrens 970V. In diesem Fall ist es also nun vorteilhafter, wenn das DPWMMAX-Modulationsverfahren verwendet wird, um die vorn erwähnten Komponenten zu schonen.

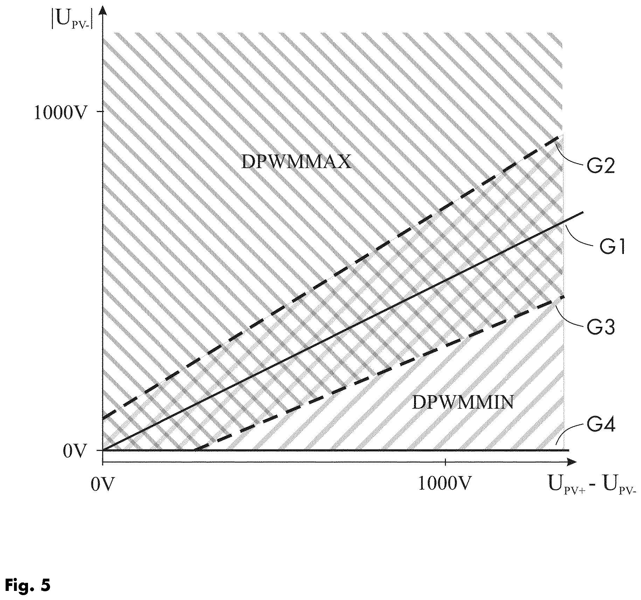

In Fig. 5 ist der Betrag des Potentials des negativen Pols PV- gegenüber Erde ($|U_{PV-}|$) als Funktion der Differenz zwischen dem Potential des positiven Pols PV+ und dem Potential des negativen Pols PV- des PV-Generators gegenüber Erdpotential ($U_{PV+}$ - $U_{PV-}$) dargestellt. Die Gerade G1 ergibt sich für den Fall, dass weder der positive noch der negative Pol des PV-Generators geerdet ist. In diesem symmetrischen Fall sollte $|U_{PV-}| = \frac{1}{2}(U_{PV+} - U_{PV-})$ gelten, d.h. die ‚Arbeitspunkte' liegen für alle Einstrahlungsbedingungen auf dieser Geraden.

Im Fall der sog. PV+ Erdung ergibt sich innerhalb des Graphen eine Gerade mit der Steigung 1 (im Graphen nicht dargestellt). Damit liegt diese Gerade immer oberhalb derer des symmetrischen Falles G1 und es sollte dann das DPWMMAX-Modulationsverfahren ausgewählt werden. Dagegen verläuft im Falle der sog. PV- Erdung eine Gerade G4 mit Steigung 0 entlang der Abszisse. In solchen Fällen sollte dann das DPWMMIN-Modulationsverfahren gewählt werden.

Neben diesen bzgl. der Erdungsverhältnisse statischen Fällen gibt es technisch relevante Fälle, bei denen z.B. ein Pol des PV-Generators auf einen festen Spannungswert ungleich dem Erdpotential gehalten wird, z.B. durch die Vorgabe eines externen Potentials, oder bei denen das Potential eines Pols des PV-Generators gegenüber Erde auf einen Maximalwert beschränkt wird. In diesen Fällen kann sich z.B. bei Veränderungen der Einstrahlungsbedingungen der Arbeitspunkt von einem Bereich, bei dem vorteilhafter Weise das eine Modulationsverfahren anzuwenden ist, in einen anderen Bereich verschieben, bei dem ein anderes Modulationsverfahren angewendet werden sollte. In solchen Fällen wird also während des Betriebes des Wechselrichters 3 zwischen verschiedenen - im dargestellten Fall zwischen zwei verschiedenen - Modulationsverfahren gewechselt. Um im Übergangsbereich einen mehrfachen Wechsel zwischen den Modulationsverfahren zu vermeiden, kann man entweder, wie bereits weiter vorn beschrieben, eine Mindestzeitspanne $\Delta t_{min}$ vorgeben, während der das Modulationsverfahren nicht erneut gewechselt werden kann, oder, wie in der Fig. 5 durch den doppelt schraffierten Bereich zwischen den beiden gestrichelt dargestellten Geraden G2, G3 angedeutet, einen Bereich definieren, innerhalb dessen das bestehende Modulationsverfahren beibehalten wird. Verändert sich beispielsweise der Arbeitspunkt so, dass der Betrag des Potentials des negativen Pols PV- gegenüber Erde ($|U_{PV-}|$) größer wird und der Arbeitspunkt aus einem Bereich unterhalb der durchgezogenen Gerade G1 in den Bereich darüber wechselt, so wird zunächst das Modulationsverfahren (hier DPWMMIN) beibehalten. Erst bei Überschreitung der oberen gestrichelt dargestellten Geraden G2 erfolgt ein Wechsel der Modulationsverfahren, hier z.B. hin zum DPWMMAX-Modulationsverfahren. Verringert sich der Betrag des entsprechenden Potentials des negativen Pols gegenüber Erde ($|U_{PV-}|$) wieder, so wird erst dann zum DPWMMIN-Modulationsverfahren gewechselt, wenn der aktuelle Arbeitspunkt die untere gestrichelte Gerade G3 unterschreitet.

**Bezugszeichen**

| 1 | Photovoltaische Anlage/PV-Anlage |
| 2 | PV-Generator |
| 3 | Wechselrichter |
| 4 | Steuerung |
| 5 | Überwachungsmittel |
| 6 | Mittel zur Kommunikation |
| 7 | Mittel zur Kommunikation |
| 8 | Speichereinrichtung |
| 9 | Mittel zur Ansteuerung |
| 10 | Transformator |
| 11 | Wechselstromnetz |
| 12 | Erdpotential |
| 13 | AC-seitiges Trennorgan |
| 14 | AC-seitiges Filter |
| 15 | Gleichspannungsleitung |
| 16 | Gleichspannungsleitung |
| 17 | Gleichspannungseingang |
| 18 | Wechselspannungsausgang |
| PV+ | positiver Pol des PV-Generator |
| PV- | negativer Pol des PV-Generator |
| $U_{PV+}$ | Potential des positiven Pols des PV-Generators gegenüber Erdpotential |
| $U_{PV-}$ | Potential des negativen Pols des PV-Generators gegenüber Erdpotential |
| $U_{PV}$ | Zwischenkreisspannung |
| Top | obere Halbleiterschalter |
| Bottom | untere Halbleiterschalter |
| $t_1, t_2$ | Zeitpunkt |
| $U_{Schwell}$ | Schwellwert |
| G1 | Gerade |
| G2 | Gerade |
| G3 | Gerade |
| G4 | Gerade |

**Patentansprüche**

1. Verfahren zum Betrieb eines Wechselrichters (3), dessen Gleichspannungseingang (17) mit einem positiven Pol (PV+) und einem negativen Pol (PV-) eines PV-Generators (2) und dessen Wechselspannungsausgang (18) über einen Transformator (10) mit einem Wechselstromnetz (11) verbunden ist,
   wobei das Verfahren folgende Schritte aufweist:

   • Bestimmung eines Potentials des positiven und des negativen Pols ($U_{PV+}$, $U_{PV-}$) des PV-Generators (2) gegenüber einem Erdpotential (12) durch ein Überwachungsmittel (5),
   • Auswahl eines Modulationsverfahrens zur Ansteuerung von Leistungsschaltern des Wechselrichters (3) aus einer Anzahl von in einer Speichereinrichtung (8) des Wechselrichters (3) hinterlegten Modulationsverfahren auf Basis der zuvor bestimmten Potentiale ($U_{PV+}$, $U_{PV-}$), wobei aus der Anzahl von in der Speichereinrichtung (8) des Wechselrichters (3) hinterlegten Modulationsverfahren dasjenige Modulationsverfahren ausgewählt wird, welches bei Vorliegen dieser Potentiale ($U_{PV+}$, $U_{PV-}$) eine Verringerung der Spannungsbelastung AC-seitig angeordneter Komponenten der PV-Anlage gegen Erde bewirkt,
   • Anwendung des ausgewählten Modulationsverfahrens zur Ansteuerung der Leistungsschalter zur Wandlung einer DC-Eingangsspannung in eine AC-Ausgangsspannung.

2. Verfahren nach Anspruch 1, **dadurch gekennzeichnet, dass**

ein Betrag des Potentials des positiven Pols gegenüber Erde ($|U_{PV+}|$) mit einem Betrag des Potentials des negativen Pols gegenüber Erde ($|U_{PV-}|$) verglichen wird.

3. Verfahren nach Anspruch 2, **dadurch gekennzeichnet, dass**
für den Fall, dass der Betrag des Potentials des positiven Pols gegenüber Erde ($|U_{PV+}|$) kleiner als der Betrag des Potentials des negativen Pols gegenüber Erde ($|U_{PV-}|$) ist, ein erstes Modulationsverfahren ausgewählt wird und für den Fall, dass der Betrag des Potential des positiven Pols gegenüber Erde ($|U_{PV+}|$) größer als der Betrag des Potential des negativen Pols gegenüber Erde ($|U_{PV-}|$) ist, ein zweites Modulationsverfahren ausgewählt wird.

4. Verfahren nach Anspruch 3, **dadurch gekennzeichnet, dass**
das erste Modulationsverfahren ein DPWMMAX-Modulationsverfahren und dass das zweite Modulationsverfahren ein DPWMMIN-Modulationsverfahren ist.

5. Verfahren nach einem der vorangehenden Ansprüche, **dadurch gekennzeichnet, dass** die Bestimmung des Potentials des positiven und des negativen Pols ($U_{PV+}, U_{PV-}$) des PV-Generators (2) gegenüber dem Erdpotential (12) durch ein Überwachungsmittel (5) und die Auswahl des Modulationsverfahrens zur Ansteuerung der Leistungsschalter des Wechselrichters (3) aus der Anzahl von in der Speichereinrichtung (8) des Wechselrichters (3) hinterlegten Modulationsverfahren auf Basis des zuvor bestimmten Potentials ($U_{PV+}, U_{PV-}$) vor dem Verbinden des Wechselrichters (3) mit dem Wechselstromnetz (11) durchgeführt wird.

6. Verfahren nach einem der vorangehenden Ansprüche, **dadurch gekennzeichnet, dass** die Bestimmung des Potentials des positiven und des negativen Pols ($U_{PV+}, U_{PV-}$) des PV-Generators (2) gegenüber dem Erdpotential (12) durch ein Überwachungsmittel (5) und die Auswahl des Modulationsverfahrens zur Ansteuerung der Leistungsschalter des Wechselrichters (3) aus der Anzahl von in der Speichereinrichtung (8) des Wechselrichters (3) hinterlegten Modulationsverfahren auf Basis des zuvor bestimmten Potentials ($U_{PV+}, U_{PV-}$) durchgeführt wird, während der Wechselrichter (3) mit dem Wechselstromnetz (11) verbunden ist.

7. Verfahren nach einem der vorangehenden Ansprüche, **dadurch gekennzeichnet, dass** das Verfahren mehrmals täglich durchgeführt wird.

8. Verfahren nach einem der vorangehenden Ansprüche, **dadurch gekennzeichnet, dass** die in der Speichereinrichtung (8) des Wechselrichters (3) hinterlegten Modulationsverfahren ein DPWMMAX-Verfahren und/oder ein DPWMMIN-Verfahren umfassen.

9. Verfahren nach einem der vorangehenden Ansprüche, **dadurch gekennzeichnet, dass** zu einem Zeitpunkt t2 ein Wechsel von dem zu einem früheren ersten Zeitpunkt $t1$ ausgewählten Modulationsverfahren zu einem anderen Modulationsverfahren nur dann erfolgt, wenn die Differenz zwischen $t1$ und $t2$ größer einer Mindestzeitspanne $\Delta t_{min}$ ist.

10. Verfahren nach einem der vorangehenden Ansprüche, **dadurch gekennzeichnet, dass** ein Wechsel von dem zu einem ersten Zeitpunkt $t1$ ausgewählten Modulationsverfahren zu einem anderen Modulationsverfahren dann erfolgt, wenn sich eine Differenz der Beträge der Potentiale des positiven Pols und des negativen Pols gegenüber Erde ($|U_{PV+}| - |U_{PV-}|$) zu einem zweiten Zeitpunkt $t2$ von einer zu dem früheren ersten Zeitpunkt $t1$ bestimmten Differenz im Vorzeichen unterscheidet und ein Betrag der Differenz der Beträge der Potentiale des positiven und des negativen Pols gegenüber Erde zu den Zeitpunkten $t1$ und $t2$ größer als ein Schwellenwert ($U_{Schwell}$) ist.

11. PV-Anlage (1) mit einem PV-Generator (2) und einem mit dem PV-Generator (2) über einen positiven Pol (PV+) und einen negativen Pol (PV-) verbundenen Wechselrichter (3),

wobei die PV-Anlage (1) über einen Transformator (10) verfügt und über diesen mit einem Wechselspannungsnetz (11) verbunden ist,
wobei die PV-Anlage (1) ein Überwachungsmittel (5) zur Bestimmung eines Potentials des positiven und des negativen Pols ($U_{PV+}, U_{PV-}$) des PV-Generators (2) gegenüber einem Erdpotential (12) aufweist,
wobei der Wechselrichter (3) eine Speichereinrichtung (8) zur Speicherung von Informationen zur Durchführung mindestens zweier verschiedener Modulationsverfahren aufweist, Leistungsschalter und Mittel zur Ansteuerung (9) dieser Leistungsschalter zur Umwandlung einer DC-Eingangsspannung in eine AC-Ausgangsspannung umfasst und eine Steuerung (4), die Mittel zur Kommunikation (7) mit dem Überwachungsmittel (5) und zur Auswahl eines Modulationsverfahrens zur Ansteuerung von Leistungsschaltern des Wechselrichters (3) aus den in der Speichereinrichtung (8) des Wechselrichters (3) hinterlegten Modulationsverfahren auf Basis der zuvor bestimmten Potentiale ($U_{PV+}$, $U_{PV-}$) des positiven und des negativen Pols gegenüber dem Erdpotential (12) umfasst, wobei der Wechselrichter zur Durchführung des Verfahrens nach einem der Ansprüche 1 bis 10 eingerichtet ist.

**12.** Wechselrichter (3) eingerichtet zur Durchführung des Verfahrens nach einem der Ansprüche 1 bis 10.

**Claims**

**1.** A method for operating an inverter (3), the DC voltage input (17) of which is connected to a positive pole (PV+) and to a negative pole (PV-) of a PV generator (2) and the AC voltage output (18) of which is connected to an AC grid (11) via a transformer (10), the method comprising the following steps of:

- determining a potential of the positive and/or negative pole ($U_{PV+}$, $U_{PV-}$) of the PV generator (2) with respect to a ground potential (12) by a monitoring means (5),
- selecting a modulation method for controlling power switches of the inverter (3) from a number of modulation methods stored in a storage device (8) of the inverter (3) on the basis of the previously determined potential ($U_{PV+}$, $U_{PV-}$) wherein the modulation method selected from the number of modulation methods stored in the storage device (8) of the inverter (3) is the one that reduces a voltage stress with respect to ground of components of the PV system arranged on the AC side when these potentials are present,
- applying the selected modulation method to control the power switches for converting a DC input voltage into an AC output voltage.

**2.** The method as claimed in claim 1, **characterized in that** an absolute value of the potential of the positive pole with respect to ground ($|U_{PV+}|$) is compared to an absolute value of the potential of the negative pole with respect to ground ($|U_{PV-}|$).

**3.** The method as claimed in claim 2, **characterized in that** a first modulation method is selected if the absolute value of the potential of the positive pole with respect to ground ($|U_{PV+}|$) is less than the absolute value of the potential of the negative pole with respect to ground ($|U_{PV-}|$) and a second modulation method is selected if the absolute value of the potential of the positive pole with respect to ground ($|U_{PV+}|$) is greater than the absolute value of the potential of the negative pole with respect to ground ($|U_{PV-}|$).

**4.** The method as claimed in claim 3, **characterized in that** the first modulation method is a DPWMMAX modulation method, and **in that** the second modulation method is a DPWMMIN modulation method.

**5.** The method as claimed in one of the preceding claims, **characterized in that** determining the potential of the positive and/or negative pole ($U_{PV+}$, $U_{PV-}$) of the PV generator (2) with respect to ground potential (12) by a monitoring means (5) and selecting the modulation method for controlling the power switches of the inverter (3) from the number of modulation methods stored in the storage device (8) of the inverter (3) on the basis of the previously determined potential ($U_{PV+}$, $U_{PV-}$) are carried out before the inverter (3) is connected to the AC grid (11).

**6.** The method as claimed in one of the preceding claims, **characterized in that** determining the potential of the positive and/or negative pole ($U_{PV+}$, $U_{PV-}$) of the PV generator (2) with respect to ground potential (12) by a monitoring means (5) and selecting the modulation method for controlling the power switches of the inverter (3) from the number of modulation methods stored in the storage device (8) of the inverter (3) on the basis of the previously determined potential ($U_{PV+}$, $U_{PV-}$) are carried out while the inverter (3) is connected to the AC grid (11).

**7.** The method as claimed in one of the preceding claims, **characterized in that** the method is carried out several times a day.

**8.** The method as claimed in one of the preceding claims, **characterized in that** the modulation methods stored in the storage device (8) of the inverter (3) comprise a DPWMMAX method and/or a DPWMMIN method.

**9.** The method as claimed in one of the preceding claims, **characterized in that** a change from the modulation method selected at an earlier first time t1 to another modulation method is carried out at a time t2 only when the difference between t1 and t2 is greater than a minimum period $\Delta t_{min}$.

**10.** The method as claimed in one of the preceding claims, **characterized in that** a change from the modulation method selected at a first time t1 to another modulation method is carried out when a difference in the absolute values of the potentials of the positive pole and of the negative pole with respect to ground ($|U_{PV+}|-|U_{PV-}|$) at a second time t2 and the difference determined at the earlier first time t1 differs in sign and an absolute value of the difference in the absolute values of the potentials of the positive and negative poles with respect to ground at the times t1 and t2 is greater than a threshold value ($U_{Schwell}$).

**11.** A PV system (1) comprising a PV generator (2) and an inverter (3) connected to the PV generator (2) via a positive pole (PV+) and a negative pole (PV-), wherein the PV system (1) comprises a transformer (10) and is connected to an AC voltage grid (11) via said transformer,

wherein the PV system (1) comprises a monitoring means (5) for determining a potential of the positive and/or negative pole ($U_{PV+}$, $U_{PV-}$) of the PV generator (2) with respect to a ground potential (12),
wherein the inverter (3) comprises a storage device (8) for storing information for carrying out at least two different modulation methods,
comprises power switches and means for controlling (9) these power switches for converting a DC input voltage into an AC output voltage, and
a controller (4) comprising means for communicating (7) with the monitoring means (5) and for selecting a modulation method for controlling power switches of the inverter (3) from the modulation methods stored in the storage device (8) of the inverter (3) on the basis of the previously determined potential ($U_{PV+}$, $U_{PV-}$) of the positive and/or negative pole with respect to ground potential (12), wherein the inverter is configured to perform the method as claimed in one of the claims 1 to 10.

**12.** The inverter (3) configured to carry out the method as claimed in one of claims 1 to 10.

**Revendications**

**1.** Procédé de fonctionnement d'un onduleur (3) dont l'entrée de tension continue (17) est reliée à un pôle positif (PV+) et à un pôle négatif (PV-) d'un générateur photovoltaïque (2) et dont la sortie de tension alternative (18) est reliée à un réseau de courant alternatif (11) par l'intermédiaire d'un transformateur (10), le procédé comprenant les étapes suivantes :

• Détermination d'un potentiel du pôle positif et du pôle négatif ($U_{PV+}$, $U_{PV-}$) du générateur photovoltaïque (2) par rapport à un potentiel de terre (12) par un moyen de surveillance (5),
• Sélection d'un procédé de modulation pour le pilotage des disjoncteurs de l'onduleur (3) parmi un certain nombre de procédés de modulation enregistrés dans un dispositif de mémoire (8) de l'onduleur (3) sur la base des potentiels déterminés auparavant ($U_{PV+}$, $U_{PV-}$) ; le procédé de modulation sélectionné parmi le nombre de procédés de modulation enregistrés dans le dispositif de mémoire (8) de l'onduleur (3) est celui qui en présence de ces potentiels ($U_{PV+}$, $U_{PV-}$) provoque une réduction de la charge de tension des composants de l'installation photovoltaïque disposés côté AC par rapport à la terre,
• Application du procédé de modulation choisi pour le pilotage des disjoncteurs afin de convertir une tension d'entrée DC en une tension de sortie AC.

**2.** Procédé selon la revendication 1, **caractérisé par**
la comparaison d'une valeur du potentiel du pôle positif par rapport à la terre ($|U_{PV+}|$) avec une valeur du potentiel du pôle négatif par rapport à la terre ($|U_{PV-}|$).

**3.** Procédé selon la revendication 2, **caractérisé en ce que**,
dans le cas où la valeur du potentiel du pôle positif par rapport à la terre ($|U_{PV+}|$) est inférieure à la valeur du potentiel du pôle négatif par rapport à la terre ($|U_{PV-}|$), un premier procédé de modulation est sélectionné et, dans le cas où la valeur du potentiel du pôle positif par rapport à la terre ($|U_{PV+}|$) est supérieure à la valeur du potentiel du pôle négatif par rapport à la terre ($|U_{PV-}|$), un deuxième procédé de modulation est sélectionné.

**4.** Procédé selon la revendication 3, **caractérisé en ce que**
le premier procédé de modulation est un procédé de modulation DPWMMAX et **en ce que** le deuxième procédé de modulation est un procédé de modulation DPWMMIN.

**5.** Procédé selon l'une des revendications précédentes, **caractérisé en ce que** la détermination du potentiel du pôle positif et du pôle négatif ($U_{PV+}$, $U_{PV-}$) du générateur photovoltaïque (2) par rapport au potentiel de terre (12) par un moyen de surveillance (5) et la sélection du procédé de modulation pour le pilotage des disjoncteurs de l'onduleur (3) parmi le nombre de procédés de modulation enregistrés dans le dispositif de mémoire (8) de l'onduleur (3) sur la base du potentiel ($U_{PV+}$, $U_{PV-}$) déterminé auparavant est effectuée avant la connexion de l'onduleur (3) au réseau de courant alternatif (11).

**6.** Procédé selon l'une des revendications précédentes, **caractérisé en ce que** la détermination du potentiel du pôle positif et du pôle négatif ($U_{PV+}$, $U_{PV-}$) du générateur photovoltaïque (2) par rapport au potentiel de terre (12) par un moyen de surveillance (5) et la sélection du procédé de modulation pour le pilotage des disjoncteurs de l'onduleur (3) parmi le nombre de procédés de modulation enregistrés dans le dispositif de mémoire (8) de l'onduleur (3) sur la base du potentiel déterminé auparavant ($U_{PV+}$, $U_{PV-}$) sont effectuées pendant que l'onduleur (3) est connecté au réseau de courant alternatif (11).

**7.** Procédé selon l'une des revendications précédentes, **caractérisé en ce que** le procédé est réalisé plusieurs fois par jour.

**8.** Procédé selon l'une des revendications précédentes, **caractérisé en ce que** les procédés de modulation enregistrés dans le dispositif de mémoire (8) de l'onduleur (3) comprennent un procédé DPWMMAX et/ou un procédé DPWMMIN.

**9.** Procédé selon une des revendications précédentes, **caractérisé en ce qu'**à un instant t2 un changement du procédé de modulation utilisé à un premier moment antérieur $t1$ à un autre procédé de modulation est seulement effectué si la différence entre $t1$ et $t2$ est supérieure à un intervalle de temps minimum $\Delta t_{min}$.

**10.** Procédé selon une des revendications précédentes, **caractérisé en ce qu'**un changement du procédé de modulation utilisé à un premier moment $t1$ à un autre procédé de manipulation est effectué quand une différence entre les valeurs des potentiels du pôle positif et du pôle négatif par rapport à la terre ($|U_{PV+}| - |U_{PV-}|$) à un deuxième moment $t2$ se distingue d'une certaine différence de signe au premier moment antérieur $t1$ et la différence des valeurs des potentiels du pôle positif et du pôle négatif par rapport à la terre aux moment $t1$ et $t2$ est supérieure à une valeur limite ($U_{Schwell}$).

**11.** Installation photovoltaïque (1) avec un générateur photovoltaïque (2) et un onduleur (3) relié au générateur photovoltaïque (2) par un pôle positif (PV+) et un pôle négatif (PV-), l'installation photovoltaïque (1) disposant d'un transformateur (10) et étant reliée par celui-ci à un réseau de tension alternative (11),

l'installation photovoltaïque (1) comprenant un moyen de surveillance (5) pour déterminer un potentiel du pôle positif et du pôle négatif ($U_{PV+}$, $U_{PV-}$) du générateur photovoltaïque (2) par rapport à un potentiel de terre (12), l'onduleur (3) comportant un dispositif de mémoire (8) destiné à mémoriser des informations pour la mise en oeuvre d'au moins deux procédés de modulation différents,
des disjoncteurs et des moyens de pilotage (9) de ces disjoncteurs pour convertir une tension d'entrée DC continue en une tension de sortie AC alternative, et une commande (4) comprenant des moyens de communication (7) avec les moyens de surveillance (5) et de sélection d'un procédé de modulation pour le pilotage des disjoncteurs de l'onduleur (3) parmi les procédés de modulation enregistrés dans le dispositif de mémoire (8) de l'onduleur (3) sur la base des potentiels déterminés auparavant ($U_{PV+}$, $U_{PV-}$) du pôle positif et du pôle négatif par rapport au potentiel de terre (12), l'onduleur étant configuré pour mettre en oeuvre le procédé selon l'une des revendications 1 à 10.

**12.** Onduleur (3) configuré pour la mise en oeuvre du procédé selon l'une des revendications 1 à 10.

Fig. 1

Fig. 2

Fig. 3

EP 3 326 283 B1

Fig. 4a — DPWMMIN / DPWMMAX

Fig. 4b

15

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202006008936 U1
- EP 2136449 B1
- DE 102010060463 B4
- DE 102011051954 A1
- US 20110273017 A1
- US 20140376293 A1

**In der Beschreibung aufgeführte Nicht-Patentliteratur**

- **J. HOLTZ.** Pulsewidth modulation-A survey. *Proc. IEEE PESC'92,* 1992, 1 7-18
- **KAZMIERKOWSKI M.P. ; OZIENIAKOWSKI M.A.** Review of current regulation techniques for three-phase PWM inverters. *IEEE Conference on Industrial Electronics, Control and Instrumentation,* 1994
- **M. RAJENDER REDDY.** SIMPLE AND NOVEL UNIFIED PULSE WIDTH MODULATION ALGORITHM FOR VOLTAGE SOURCE INVERTERS IN THE ENTIRE MODULATION RANGE. *Acta E/ectrotechnica et Informatica,* 2013, vol. 13 (3), 8-55
- **SHAOLIANG AN ; LU LAI ; XLALVGDONG SUN ; YANRU ZHONG ; BIYING REN ; QI ZHANG.** Neutral point voltage-balanced control method based on discontinuous pulse width modulation for a NPC 3-level inverter. *2015 9th International Conference on Power Electronics and ECCE Asia (ICPE-ECCE Asia),* 2015, 2820-2825
- **HYEOUN-DONG LEE et al.** A New Space Vector Pulsewidth Modulation Strategy for Reducing Ground to Stator-Neutral Voltage in Inverter-Fed ac Motor Drives. *APEC 2000, 15th Annual IEEE Applied Power Electronics Conference and Exposition, New Orleans,* 918-923
- **X. YANG.** Genera/ized Space Vector Pulse Width Modulation Technique for Cascaded Multilevel Inverters. *International Journal of Control and Automation,* 2014, vol. 7 (1), 11-26